Europäisches Patentamt

European Patent Office

Office européen des brevets

(19)

(11) EP 1 468 722 A2

(12) EUROPEAN PATENT APPLICATION

(43) Date of publication:
20.10.2004 Bulletin 2004/43

(51) Int Cl.⁷: **B01D 53/94**, F02B 43/10, C01B 3/32

(21) Application number: 04076095.1

(22) Date of filing: 08.04.2004

(84) Designated Contracting States:
AT BE BG CH CY CZ DE DK EE ES FI FR GB GR HU IE IT LI LU MC NL PL PT RO SE SI SK TR
Designated Extension States:
AL HR LT LV MK

(30) Priority: 14.04.2003 US 413008

(71) Applicant: Delphi Technologies, Inc.
Troy, MI 48007 (US)

(72) Inventors:
• Kirwan, John E.
Troy, MI 48084 (US)

• Botti, Jean Joseph
Rochester Hills, Michigan 48309 (US)

(74) Representative: Denton, Michael John et al
Delphi European Headquarters,
64 avenue de la Plaine de France,
Paris Nord II,
BP 60059,
Tremblay-en-France
95972 Roissy Charles de Gaulle Cédex (FR)

(54) **System and method for reducing emissions from engines**

(57) A reformate/buffer system and method for operating an exhaust emissions control device are disclosed herein. In one embodiment, the reformate/buffer system comprises: a hydride storage bed, a hydride cycling bed (24) disposed in fluid communication with the hydride storage bed (10), a hydrogen separation device (22), a reformate flow path, coolant flow passages in thermal communication with the hydride cycling bed, and reformer flow passages in thermal communication with the hydride cycling bed. The reformate flow path is formed by the hydride storage bed, the hydride cycling bed, and the hydrogen separation device and is disposed in fluid communication with the hydride storage bed and hydride cycling bed.

Fig.1.

EP 1 468 722 A2

**Description**

BACKGROUND OF THE INVENTION

Catalytic converters comprising catalyst compositions, including those commonly referred to as three-way conversion catalysts ("TWC catalysts") have been employed to treat the exhaust gases of internal combustion engines. Such catalysts, containing precious metals like platinum, palladium, and rhodium, have been found both to successfully promote the oxidation of unburned hydrocarbons (HC) and carbon monoxide (CO) and to promote the reduction of nitrogen oxides ($NO_x$) in exhaust gas, provided that the catalytic converter attains a sufficient temperature and that the engine is operated around balanced stoichiometry for combustion ("combustion stoichiometry"; i.e., between about 14.7 and 14.4 air/fuel (A/F) ratio).

However, fuel economy and global carbon dioxide ($CO_2$) emissions have made it desirable to operate engines under lean-bum conditions (i.e., "oxygen rich"), where the air-to-fuel ratio is somewhat greater than combustion stoichiometry to realize a benefit in fuel economy. Diesel and lean-bum gasoline engines generally operate under highly oxidizing conditions (i.e., using much more air than is necessary to bum the fuel), typically at air/fuel ratios greater than 14.7 and generally between 19 and 35.

Although nitrogen oxides ($NO_x$) form at the high temperatures normally associated with internal combustion engine operation, $NO_x$ generation may be reduced by operating an engine under lean conditions at lower temperatures, but the limits of lean combustion technology still result in $NO_x$ emissions in excess of required minimal levels. Under these highly lean conditions, typical three-way catalysts exhibit little activity toward $NO_x$ reduction, as their reduction activity is suppressed by the presence of excess oxygen.

The control of $NO_x$ emissions from vehicles is a worldwide environmental problem. Lean-bum, high air-to-fuel ratio, and diesel engines are certain to become more important in meeting the mandated fuel economy requirements of next-generation vehicles. California has enacted a Super Ultra Low Emission Vehicle ("SULEV") standard, has emission certification levels 93% more stringent than current Ultra Low Emission Vehicle ("ULEV") standards for oxides of nitrogen ($NO_x$), 82% more stringent for non-methane organic gases (NMOG), and 75% more stringent for particulate matter (PM). These strict emission standards dictate that an emission system be developed that is compatible with conventional fuels for an internal combustion engine and yet achieve essentially zero emissions and high efficiency.

Exhaust gas emissions from an internal combustion engine, such as unburned hydrocarbons, carbon monoxide, and nitrogen oxides, are known to be at their worst levels during approximately the first 60 seconds of engine operation, i.e., during cold start. This situation occurs since the catalytic converter at engine start-up is below its "light-off" temperature (i.e., the temperature at which the catalytic converter converts greater than or equal to 50 wt% of at least one exhaust gas component (e.g., HC to water ($H_2O$) and carbon dioxide ($CO_2$)) and therefore is unable effectively to react with and reduce the harmful exhaust emissions. Exhaust gas emissions may, in particular, be high in unburned hydrocarbons during the beginning of engine operation since the A/F ratio is typically fuel-rich during the starting of the engine. Development of an effective, efficient, and robust system and method for controlling exhaust emissions is needed to attain the desired low level of emissions, particularly during cold start.

SUMMARY OF THE INVENTION

A reformate/buffer system and method for operating an exhaust emissions control device are disclosed herein. In one embodiment, the reformate/buffer system comprises: a hydride storage bed, a hydride cycling bed disposed in fluid communication with the hydride storage bed, a hydrogen separation device, a reformate flow path, coolant flow passages in thermal communication with the hydride cycling bed, and reformer flow passages in thermal communication with the hydride cycling bed. The reformate flow path is formed by the hydride storage bed, the hydride cycling bed, and the hydrogen separation device and is disposed in fluid communication with the hydride storage bed and hydride cycling bed.

In one embodiment, the method for operating an exhaust emissions system comprises: reforming fuel to produce a reformate comprising reformate hydrogen and byproducts, passing the reformate through the reformate flow path, separating the reformate hydrogen from the byproducts, absorbing the reformate hydrogen in a hydride cycling bed while removing heat from the hydride cycling bed, heating the hydride cycling bed to desorb hydrogen at least until a partial pressure of hydrogen over the hydride cycling bed attains a selected level, storing the desorbed hydrogen in a hydride storage bed, and, during cold start, desorbing storage bed hydrogen and burning a first portion of the storage bed hydrogen in an engine.

The above-described and other features and advantages will be appreciated and understood by those skilled in the art from the following detailed description, drawings, and appended claims.

BRIEF DESCRIPTION OF THE DRAWINGS

Referring now to the figures which are exemplary, and wherein like elements are numbered alike, not limiting:

Figure 1 is a schematic of the operation of a micro-reformer/hydride buffer system for an internal combustion engine;

Figure 2 is a cross-sectional view of the micro-reformer/hydride buffer system, taken in the flow direction; and

Figure 3 is a cross-sectional view of the micro-reformer/hydride buffer system, taken at an angle perpendicular to the flow direction.

DESCRIPTION OF THE PREFERRED EMBODIMENT

Hydrogen is attractive as a fuel or as a fuel additive for internal combustion engines because hydrogen as a fuel source significantly can reduce exhaust emissions as well as serve as an alternative energy source. However, means to store and to generate hydrogen on board for use in vehicles powered by internal combustion engines are not simple and have been beset with various obstacles and problems. On board storage requires high pressure vessels, cryogenic containers, if the hydrogen is to be stored as a compressed gas or liquid, or large volumes and weights, if the hydrogen is to be stored as a hydride. A compact combination of a reformer with a hydride buffer system enables the efficient capture of waste heat from the reformer. The captured waste heat can be used to increase pressure in the cycling bed in order to drive hydrogen from the bed to a storage bed. This can be accomplished in a concentric or other geometry, with a concentric geometry set forth herein for illustration only. Some other possible geometries comprise various polygonal designs, curved shapes, combinations thereof, and the like.

In regard to on-board production of hydrogen, one such system involves the electrolysis of water into hydrogen and oxygen, and subsequently introducing the hydrogen into an internal combustion engine. Alternatively, hydrogen is obtained by treating a portion of the main engine fuel itself. This system does not require storage or the introduction into the system of another expendable fuel and can be accomplished with little or no loss of engine fuel energy. Such a proposed system utilizes a portion of the hydrocarbon fuel and reforms that fuel to form a hydrogen product and other by-products.

Various types of reformer technologies typically can be employed in on-board hydrogen generating systems (e.g., steam reformers, dry reformers, and partial oxidation reformers - using water, carbon dioxide, and oxygen, respectfully) to convert hydrocarbon fuel (methane, propane, natural gas, gasoline, diesel fuel and the like) to hydrogen, with byproducts including water, carbon dioxide, and carbon monoxide, accordingly. These reformers operate at high temperatures (e.g., about 800°C or greater). At lower temperatures, e.g., during start-up, deposition of carbon (or soot) upon the catalyst can adversely affect the reformer efficiency and reduce reformer life. Major requirements for the reformers are rapid start, dynamic response time, fuel conversion efficiency, size, and weight.

Since rapid start-up and shut down cycles are typical in automobile applications, the reformer catalyst bed is preferably heated rapidly with the air/fuel mixing zone carefully controlled in temperature to avoid gas phase reactions in the mixing zone of the reformer system because, when using reactive fuels like gasoline or diesel fuels, gas phase reactions tend to produce lower quality reformate having more soot and less hydrogen. This proves to be very inefficient due to soot build-up that can rapidly impair reformer performance as well as components disposed downstream.

In an effort to reduce harmful emissions, it has been discovered that hydrogen addition to internal combustion fuel systems serves to help reduce emissions to an acceptable level. This is particularly true during cold start. Introduction of hydrogen to an engine during cold start reduces the emissions because the hydrogen bums cleanly. However, metering hydrogen to the engine from an external source, or directly from a reformer (during cold start) is, at best, difficult and cumbersome, requiring light-off of the reformer before the hydrogen can be produced, or connection of the engine to an external hydrogen source. However, storage of a sufficient amount of hydrogen on board the vehicle to enable low emissions cold start, i.e., until light off of the exhaust emissions control device, and preferably until the reformer and exhaust emissions control device(s) have attained their light-off temperature, enables emission levels that meet SULEV standards in a simple, self contained system.

In order to meet SULEV emission standards, particularly during cold start, an emission reduction system and method can be employed in a vehicle (e.g., a spark ignition, compression ignition, and/or diesel engine). The emission reduction system utilizes hydrogen enrichment in order to meet emission standards. An on board reformer (e.g., a micro-reformer) provides the capability of producing hydrogen-rich reformate fuel from hydrogen-containing fuel stock such as gasoline. The fuel is stored in a buffer system for use during cold start. During cold start, the hydrogen in the buffer system is directed to the engine and optionally to the reformer and emission control device(s). In the engine, the amount of hydrogen can be metered to attain a desired exhaust gas content that can be handled by the exhaust emission control device(s) (e.g., catalytic converters, evaporative emissions devices, scrubbing devices (e.g., hydrocarbon, sulfur, and the like), particulate filters/traps, adsorbers/absorbers, non-thermal plasma reactors, and the like, as well as combinations comprising at least one of the foregoing devices) disposed downstream of the engine. In the reformer and the exhaust emission control device(s), the hydrogen is burned to rapidly heat these components to their respective light-off temperatures.

The reformer can be a micro-reformer, i.e., a reformer only having sufficient capacity to produce enough hydrogen to re-supply the buffer system during engine operation (i.e., when the buffer system is not supplying hydrogen to various system components), and optionally to supply a desired amount of hydrogen to the engine during operation. The micro-reformer for example, can be sized to provide sufficient heat (in a full combustion mode) and sufficient reformate (in the reforming mode) to pre-heat and start-up various downstream devices in the desired period of time. The micro-reformer is generally a small fraction of the size of an optional downstream reformer and is typically designed differently than a main reformer. A micro-reformer can utilize metal parts (e.g., heating coils) while ceramic parts are preferred for a main reformer because of the high operating temperatures. The normal operating temperature for a micro-reformer is less than a main reformer (i.e., about 825°C vs. about 950°C). In the case where a main reformer is utilized, there is about a four to one ratio in catalyst volume of a reformer to a micro-reformer (i.e., the size of the micro-reformer can be about 50% or less of the size of the main reformer, with a size of about 35% or less of the main reformer useful in some applications, and sizes of about 25% down to about 10% or so of the size of the main reformer preferred in some applications).

The processing or reforming of hydrocarbon fuels is completed to provide an immediate fuel source for cold start of an engine, exhaust emission control device(s), and/or rapid start up of a fuel cell. Fuel reforming can comprise mixing fuel with air, water and/or steam in a reforming zone before entering the reformer system, and converting a hydrocarbon (such as gasoline or diesel fuel) or an oxygenated fuel (such as methanol) into hydrogen ($H_2$) and byproducts (e.g., carbon monoxide (CO), carbon dioxide ($CO_2$) methane ($CH_4$), inert materials (e.g., nitrogen ($N_2$), carbon dioxide ($CO_2$), and water ($H_2O$)). Common approaches include steam reforming, partial oxidation, and dry reforming. Both steam reforming and dry reforming are endothermic processes, while partial oxidation is an exothermic process.

Steam reforming systems involve the use of a fuel and steam ($H_2O$) that is reacted in heated tubes filled with catalysts to convert the hydrocarbons into principally hydrogen and carbon monoxide. The steam reforming reactions are endothermic, thus the steam reformer reactors are designed to transfer heat into the catalytic process. An example of the steam reforming reaction is as follows:

$$CH_4 + H_2O \rightarrow CO + 3H_2$$

Partial oxidation reformers are based on substoichiometric combustion to achieve the temperatures necessary to reform the hydrocarbon fuel. Decomposition of the fuel to primarily hydrogen and carbon monoxide occurs through thermal reactions at high temperatures of about 600°C to about 1,200°C, and preferably, about 700°C to about 1,050°C. Catalysts have been used with partial oxidation systems (catalytic partial oxidation) to promote conversion of various low sulfur fuels into synthesis gas. The use of a catalyst can result in acceleration of the reforming reactions and can provide this effect at lower reaction temperatures than those that would otherwise be required in the absence of a catalyst. An example of the partial oxidation reforming reaction is as follows:

$$CH_4 + \tfrac{1}{2}O_2 \rightarrow CO + 2H_2$$

Dry reforming involves the creation of hydrogen and carbon monoxide in the absence of water, for example using carbon dioxide as the oxidant. Dry reforming reactions, like steam reforming reactions, are endothermic processes. An example of the dry reforming reaction is depicted in the following reaction:

$$CH_4 + CO_2 \rightarrow 2CO + 2H_2$$

Practical reformer systems can comprise a combination of these idealized processes. Thus, a combination of air, water and recycled exhaust gas can be used as the oxidant in a reforming process. As previously stated, the reformer system, as well as several other downstream automotive systems, can operate at elevated temperatures. Consequently, in order to start up these systems (e.g., the reformer system, a catalytic after-treatment system, a catalytic heat exchanger, a burner, and other treatment devices, as well as combinations comprising at least one of these systems), a micro-reformer can be employed. The micro-reformer, which can be a reformer, or catalytic or gas phase combustor, is preferably an exothermic partial oxidation reformer. Since this micro-reformer produces heat and a reformate, the combination can be employed to heat or otherwise bring the various systems up to the desired temperature.

The reformer can optionally have a vaporizer, an inline element that transfers thermal energy to the stream to be reformed, and a preheater disposed upstream of a reforming catalyst. In operation, a supply of reactants (e.g., fuel and air) enters and mixes in the reformer. The mixture optionally passes over and contacts a vaporizer, gaining thermal energy. The mixture then flows downstream of the vaporizer to an optional mixing zone for more thorough mixing. Downstream of the optional mixing zone, the mixture contacts a reforming catalyst where it reacts to form a heated reformate. The heated reformate exits the reformer and is directed to the buffer system and/or the engine.

Although the buffer system can comprise various hydrogen storage device(s) (e.g., compressed or cryogenic storage), hydride storage is preferred due to smaller size and system simplicity. Various hydride storage technology can be employed. Preferably chemical hydride(s) are employed, including alkali metal hydrides, transition metal hydrides, alkaline earth metal hydrides, and the like, as well as alloys and combinations comprising at least one of the foregoing hydrides. For example, hydrides of magnesium (Mg), nickel (Ni), vanadium (V), iron (Fe), titanium (Ti), lanthanum (La), molybdenum (Mo), and the like, as well as combinations and alloys comprising at least one of the foregoing; e. g., Mg-Ni, Fe-Ti, La-Ni, Mg-Ni-Mo, and Mg-Fe-Ti, NaH, NaBH$_4$, and the like.

Optionally, the buffer can comprise disordered multi-component hydrogen storage materials. The disordered materials can comprise amorphous, microcrystalline, intermediate range order, polycrystalline (lacking long range compositional order) phases, and the like, as well as combinations comprising at least one of the foregoing phases. As is further described in U.S. Patent No. 6,193,929 to Ovshinsky et al., the polycrystalline material may include one or more of topological, compositional, translational, and positional modification and disorder, which can be designed into the material. The framework of active materials of these disordered materials preferably comprise a host matrix of one or more elements and modifiers incorporated into this host matrix. The modifiers enhance the disorder of the resulting materials and thus create a greater number and spectrum of catalytically active sites and hydrogen storage sites.

For example, a hydride alloy can comprise greater than or equal to about 90 weight percent (wt%) magnesium, based upon the total weight of the alloy forming the hydride. The resulting hydride will have a hydrogen storage capacity of at least 6 wt%, absorption kinetics such that the hydride greater than or equal to about 80% of it's total capacity within 5 minutes at 300°C, and a particle size range of about 30 to about 70 micrometers. Modifiers elements added to the magnesium to produce the alloys mainly include Ni and Mm (misch metal) and can also include additional elements such as aluminum (Al), yttrium (Y), and silicon (Si). Thus the alloys forming the hydride can comprise about 0.5 to about 2.5 wt% nickel and about 1.0 to about 4.0 wt% Mm (predominantly containing cerium (Ce), La, and praseodymium (Pr)), based upon the total weight of the alloy. The alloy forming the hydride may also comprise one or more of about 3 to about 7 wt% Al, about 0.1 to about 1.5 wt% Y, and about 0.3 to about 1.5 wt% silicon, based upon the total weight of the alloy.

Since the hydrogen is preferably introduced to the engine, and optionally other vehicle components, at an elevated hydrogen partial pressure (P$_{H2}$), e.g., greater than or equal to about 100 kilopascals (kPa), while typically being produced by the reformer at pressures of less than or equal to about 30 kPa, the hydride storage bed is preferably used in combination with a hydride cycling bed. The hydride cycling bed can comprise the same or a different hydride storage material as the hydride storage bed and has a sufficient size to recharge the hydride storage bed in a desired period of time. During recharging, the hydride cycling bed received hydrogen from the reformer, preferably via a hydrogen separation device. As the heat is removed from the hydrogen, the hydrogen is absorbed by the material in the hydride cycling bed. Once the bed attains a desired capacity, the flow from the reformer ceases and the bed is heated. Once the P$_{H2}$ in the hydride cycling device attains a desired partial pressure, the valve between the hydride cycling bed and the hydride storage bed is opened, the hydrogen flows to and is absorbed by the hydride storage bed. Generally a P$_{H2}$ of greater than or equal to about 100 kPa is desired upon heating the hydride cycling bed, with greater than or equal to about 200 kPa preferred, and greater than or equal to about 250 kPa more preferred.

Since hydrides can be poisoned by water and carbon monoxide (CO) in the quantities produced by a reformer, a hydrogen separation device is preferably disposed in fluid communication with the reformer and the hydride, downstream of the reformer and upstream of the hydride. The hydrogen separation device can comprise any device capable of separating hydrogen from water, and preferably capable of separating hydrogen from water and contaminants such as carbon monoxide, nitrogen, carbon dioxide, and the like. Possible hydrogen separation devices include desiccant beds, membranes, preferential CO oxidizers (such as an oxidation catalyst that is preferential to carbon monoxide), condensers, a water absorbers or diverters, and the like, as well as combinations comprising at least one of the foregoing devices.

The heat source used to heat the hydride storage bed and that used to heat the hydride cycling bed can be a single or multiple sources. These sources, as well as the heat sinks employed to remove heat from the hydride storage bed and the hydride cycling bed, can comprise any heat source/sink operable in the environment (e.g., the environmental conditions to which they are exposed). Furthermore, a single device can be employed to remove and supply heat to and from both the hydride storage bed and the hydride cycling bed, or separate devices can be employed. Some possible devices comprise heat exchangers, and the like.

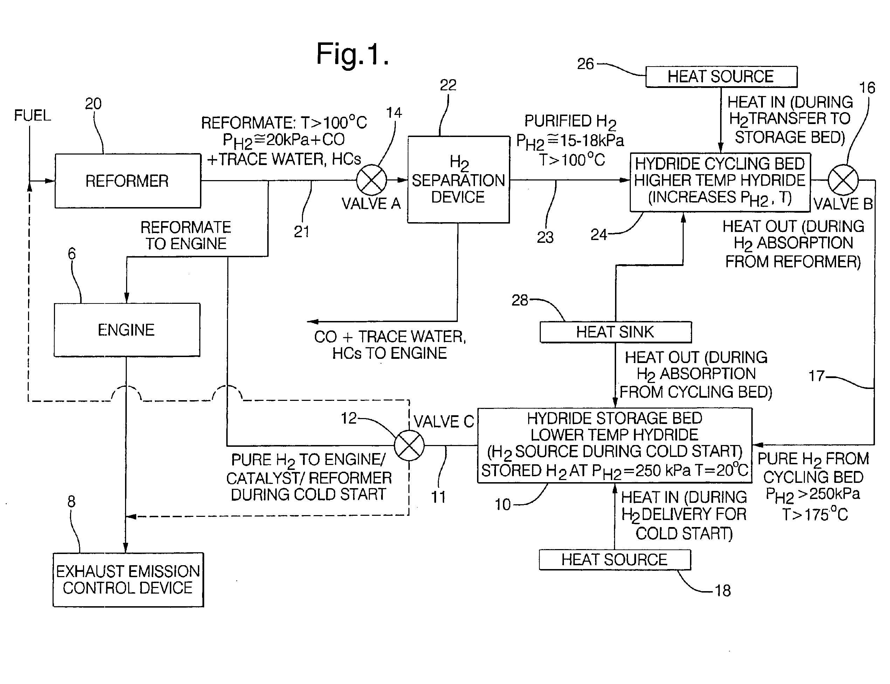

Figure 1 outlines a general scheme for an emission reduction system for an internal combustion engine. The operating cycle of an internal combustion engine, using the outlined system, comprises supplying hydrogen from the hydride storage bed 10, at ambient temperature, during cold engine start. Flow of hydrogen through line 11 entails opening valve 12 opened, while valves 14 and 16 remain closed. Heat transfer from heat source 18 to the storage bed 10. The liberated hydrogen flows, via line 11 and valve 12 to engine 6, reformer 20, and/or exhaust emission control device(s) 8. The flow from the hydride storage bed 10 is preferably maintained after the engine starts, until the desired device(s) (reformer 20, and/or exhaust emission control device(s) 8) attain it/their light-off temperature. The flow of hydrogen from hydride storage bed 10 can be ceased either upon exhaustion of the hydrogen in the bed 10 or by ceasing the introduction of heat to the bed 10 from the heat source 18. Without heat transfer to the hydride storage bed 10, the temperature and hydrogen pressure decreases such that hydrogen desorption ceases.

Once the reformer 20 has attained its operating temperature, the reformer 20 can be employed to provide reformate (i.e., reformed fuel) to the engine 6 and/or to re-supply the hydrogen storage bed 10. Since, for use in an engine and often in other devices, the partial pressure of hydrogen ($P_{H2}$) should be greater than or equal to about 100 kilopascals (kPa). In order to attain the desired $P_{H2}$, the hydrogen produced in the reformer 20 is preferably initially absorbed in a hydride cycling bed 24. This process entails preferably passing reformate from the reformer 20 through line 21 and valve 14 into a hydrogen separation device 22 wherein water and impurities are preferably removed from the stream. The hydrogen then passes via line 23 into hydride cycling bed 24 where it is adsorbed in an exothermic reaction. The heat generated by this reaction can be removed via heat sink 30. During this process, valves 16 and 12 are preferably in the closed position.

Once the hydride cycling bed 24 has attained a desired hydrogen capacity (preferably greater than or equal to about 80% of its hydrogen capacity), valve 14 is closed. Heat is then introduced to the hydride cycling bed 24 via heat source 26 such that the absorbed hydrogen desorbs, increasing $P_{H2}$ to the desired partial pressure. Once the desired partial pressure has been attained, valve 16 is opened and the hydrogen flows from the hydride cycling bed 24, through valve 16 and line 17 to the hydride storage bed 10. In the hydride storage bed 10, the hydrogen is absorbed via an exothermic reaction while the heat is removed via heat sink 28. This cycle (i.e., absorbing in the hydride cycling bed, desorbing in the hydride cycling bed, and absorbing in the hydride storage bed) is repeated as needed to re-supply the hydrogen storage bed to the desired level, (preferably greater than or equal to about 80% of its nominal storage capacity).

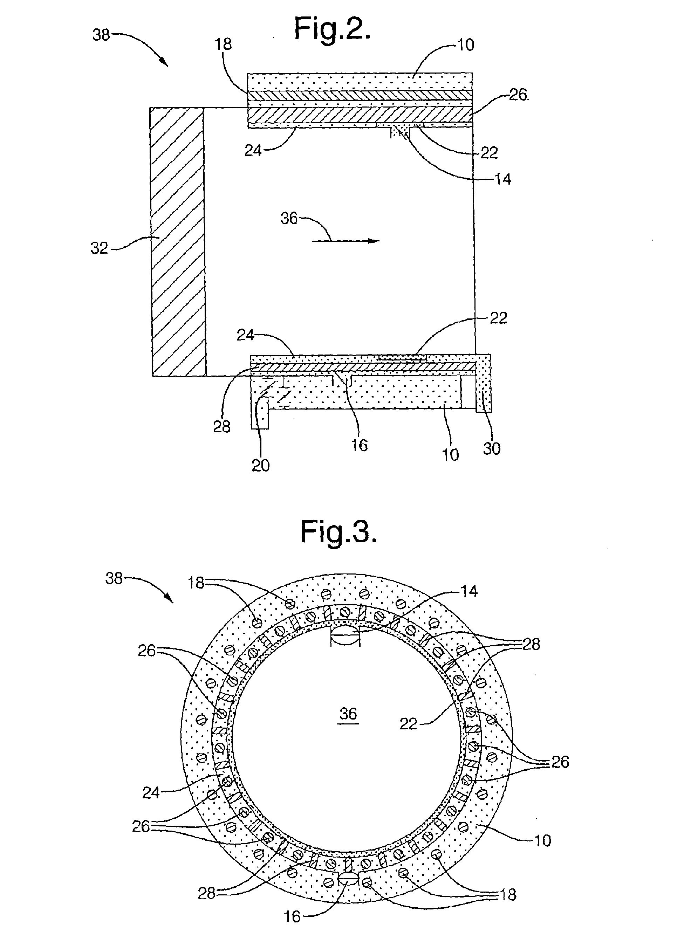

Referring now to Figures 2 and 3, a compact reformer/buffer system is shown in cross-sectional views. The system, illustrated in a concentric design, intimately integrates the hydride storage bed 10, hydride cycling bed 24, hydrogen separation device 22, and reformer catalyst 32 into a compact device useful, for example, on in automobiles and the like. In the particular design illustrated, a reformate flow path (illustrated by arrow 36) passes through the reformate/buffer system 38. The system 38 can comprise a concentric or other geometry capable of compactly and efficiently incorporating the hydride cycling bed 24, various passages 18, 26, 28, hydrogen separation device 22 into a single device thereby rendering it useful in applications such as automotive and other applications where space and weight limits are a factor. The system preferably further comprises other components such as coolant inlet 4, coolant outlet 30, and valves 14,16. Furthermore, disposed at an end of the system 38 is a reformer catalyst 32.

In the design illustrated in Figure 3, the reformate flow path 36 is concentrically disposed within the hydride cycling bed 24, with a hydrogen separation device 22 disposed between the hydride cycling bed 24 and the reformate flow path 36. Disposed longitudinally through the hydride cycling bed 22, parallel to the reformat flow path 36, are passages; flow through passages 26 for reformate that provides a heat source during hydrogen transfer to the hydride storage bed 10, coolant (e.g., engine coolant, air, or the like) flow-through passages 28 that provide a heat sink during hydrogen adsorption from the reformer. Disposed on a side of the hydride cycling bed 24 opposite the hydrogen separation device 22 is the hydride storage bed 10. As with the hydride cycling bed 24, the hydride storage bed 10 comprises passages disposed longitudinally there through, parallel to the reformat flow path 36. The passages in the hydride storage bed 10 can comprise flow through passages 18 for coolant (e.g., engine coolant, air, or the like) that provides a sink during hydrogen adsorption from the hydride cycling bed 24 and a heat source during hydrogen delivery for cold start. The passages 18, 26, 28 each preferably comprise a plurality of passages disposed evenly around the reformate flow path 36.

Alternative designs could comprise the location of the passages 26, 28, and 18 in different areas of the system e.g., in the hydride cycling bed and/or the hydride storage bed. It is further contemplated that the locations of the hydride storage bed 10, hydrogen separation device 22, and hydride cycling bed 24 could be arranged such that the hydride storage bed 10 is disposed on one side of the reformate flow path 36, while the hydride cycling bed 24 is disposed on the other side of the reformate flow path 36. For example, both the hydride storage bed 10 and hydride cycling bed 24 could form semicircles, semi-ellipses, or the like, with the ends of the semicircles, semi-ellipses joining to form the reformate flow path 36 therein. In this embodiment, the hydride cycling bed would not be concentrically disposed within the hydride storage bed, and the hydrogen separation device would be concentrically disposed within the hydride storage bed and/or hydride cycling bed.

Although disposing the reformate flow through passages 26 in an alternating relationship with coolant flow through passages 28, various other arrangements can be employed where 2 or more of the reformate flow through passages 26 or coolant flow through passages 28 are disposed together with one or more of the other passages 28,26 respectively, or where the all or substantially all of the reformate flow through passages 26 are disposed on one side of the reformate flow path (e. g., in a semi-circular, semi-elliptical, or similar arrangement), while all or substantially all of the coolant flow through passages 28 are disposed on the other side of the reformate flow path (e.g., in a semi-circular, semi-elliptical, or similar arrangement). Finally, if the overall system geometry is multi sided, the passages and/or the hydride cycling bed, hydride storage bed, and/or hydrogen separation device could be disposed on one or more sides of the system to form the reformate flow path. For example, the shape could be triangular with one of the hydride cycling bed, hydride storage bed, and hydrogen separation device forming each of the sides, and the passages disposed there through, wherein each side could comprise one or more passage types.

This cycle (i.e., absorbing in the hydride cycling bed, desorbing in the hydride cycling bed, and absorbing in the hydride storage bed) is repeated as needed to re-supply the hydrogen storage bed to the desired level, leaving the hydrogen storage bed ready to supply hydrogen for the next cold engine start. Accordingly, the described system comprises a close-coupled, integrated arrangement of a micro-reformer plus a hydride buffer that efficiently absorbs the waste heat of the reformer to heat the hydride cycling and storage beds as required. The system compactly combines the reformer with hydride buffer system in order to efficiently capture waste heat from the reformer. This captured waste heat is used to increase pressure in the cycling bed in order to drive the hydrogen from the recycling bed to the storage bed.

Numerous advantages are realized with the present emissions reduction system, including the ability to meet the SULEV emission standards. Furthermore, for spark ignition (SI) engine applications, it is advantageous to have the reformer light-off procedure decoupled from the engine cold start procedure. This decoupling allows for simpler vehicle calibration for meeting near-zero emissions by providing fuel characteristics during engine warm-up that are constant, well known, and understood. Without hydrogen storage and immediate availability for cold start-up, the engine is fueled during warm-up using a reformate fuel whose composition changes as the reformer unit itself heats up, thereby producing an exhaust gas stream with varying characteristics and significantly enhancing the difficulty in reducing emissions to meet SULEV emission standards. Further, since the hydrogen can also be used for rapid exhaust emission control device and/or reformer catalyst light-off heating efficiency, the exhaust system can further attain operating temperature rapidly, thereby further reducing possible emissions.

While the invention has been described with reference to an exemplary embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A reformate/buffer system, comprising:

    a hydride storage bed (10);
    a hydride cycling bed (24) disposed in fluid communication with the hydride storage bed (10);
    a hydrogen separation device (22);
    a reformate flow path (36) formed by the hydride storage bed (10), the hydride cycling bed (24), and the hydrogen separation device (22) and is disposed in fluid communication with the hydride storage bed (10) and hydride cycling bed (24);
    coolant flow passages (28) in thermal communication with the hydride cycling bed (24); and
    reformer flow passages (36) in thermal communication with the hydride cycling bed (24).

2. The system of Claim 1, wherein the hydride cycling bed (10) is concentrically disposed between hydrogen separation device (22) and the hydride storage bed (24), with the hydrogen separation device (22) disposed adjacent at least a portion of an interior surface of the hydride cycling bed (10).

3. The system of Claim 2, wherein the hydride cycling bed (10) is disposed around at least a portion of the reformer flow passages (36) and the hydride storage bed (10) is disposed around at least a portion of the coolant flow passages (28).

4. The system of Claim 3, wherein the hydride cycling bed (10) is disposed around at least another portion of the coolant flow passages (28).

5. The system of Claim 3, wherein the at least a portion of the coolant flow passages (28) are disposed in an alternating relationship to the reformer flow passages (36).

6. The system of Claim 1, wherein the hydride storage bed (10), and hydride cycling bed (24) each have a semicircular or semi-elliptical geometry and are arranged to form a circle or ellipse.

7. The system of Claim 6, wherein the hydrogen separation device (22) is disposed between at least a portion of at least one of the hydride storage bed (10) and the hydride cycling bed (24) and the reformate flow path (36).

8. The system of Claim 1, further comprising a reformer catalyst (32) disposed within at least a portion of the reformate flow passage (36).

9. A method for operating an exhaust emissions system, comprising:

reforming fuel to produce a reformate comprising reformate hydrogen and byproducts;

passing the reformate through a reformate flow path (36) formed by the hydride storage bed (10), the hydride cycling bed (24), and the hydrogen separation device (22) and is disposed in fluid communication with the hydride storage bed (10) and hydride cycling bed (24);

separating the reformate hydrogen from the byproducts;

absorbing the reformate hydrogen in a hydride cycling bed (24) while removing heat from the hydride cycling bed (24);

heating the hydride cycling bed (24) to desorb hydrogen at least until a partial pressure of hydrogen over the hydride cycling bed (24) attains a selected level;

storing the desorbed hydrogen in a hydride storage bed (10); and

during cold start, desorbing storage bed hydrogen and burning a first portion of the storage bed hydrogen in an engine.

10. The method of Claim 9, further comprising introducing a second portion of the storage bed hydrogen to a reformer (20) and heating the reformer (20) to its light-off temperature.

11. The method of Claim 10, further comprising introducing a third portion of the storage bed hydrogen to an exhaust emission control device (8) and heating the exhaust emission control device (8) to its light-off temperature.

12. The method of Claim 9, further comprising introducing a third portion of the storage bed hydrogen to an exhaust emission control device (8) and heating the exhaust emission control device (8) to its light-off temperature.

13. The method of Claim 10, further comprising recharging the hydride storage bed (10) by after the engine attains the light-off temperature, wherein the recharging comprises

reforming fuel to produce a reformate comprising reformate hydrogen and byproducts;

separating the reformate hydrogen from the byproducts;

absorbing the reformate hydrogen in a hydride cycling bed (24) while removing heat from the hydride cycling bed (24);

heating the hydride cycling bed (24) to desorb hydrogen at least until a partial pressure of hydrogen over the hydride cycling bed (24) attains a selected level; and

storing the desorbed hydrogen in a hydride storage bed (10).

# Fig.1.

EP 1 468 722 A2

FUEL

**REFORMER** (20)

REFORMATE: T>100°C $P_{H2} \cong 20kPa + CO$ +TRACE WATER, HCs (14)

(21) VALVE A

**H₂ SEPARATION DEVICE** (22)

PURIFIED H₂ $P_{H2} \cong 15\text{-}18kPa$ T>100°C

(23) (24)

**HEAT SOURCE** (26)

HEAT IN (DURING H₂ TRANSFER TO STORAGE BED)

**HYDRIDE CYCLING BED HIGHER TEMP HYDRIDE (INCREASES $P_{H2}$, T)**

VALVE B (16)

HEAT OUT (DURING H₂ ABSORPTION FROM REFORMER)

REFORMATE TO ENGINE

**ENGINE** (6)

CO + TRACE WATER, HCs TO ENGINE

**HEAT SINK** (28)

HEAT OUT (DURING H₂ ABSORPTION FROM CYCLING BED)

(17)

(12) VALVE C

PURE H₂ TO ENGINE/ CATALYST/ REFORMER DURING COLD START (11)

**HYDRIDE STORAGE BED LOWER TEMP HYDRIDE (H₂ SOURCE DURING COLD START) STORED H₂ AT $P_{H2} = 250$ kPa T=20°C** (10)

HEAT IN (DURING H₂ DELIVERY FOR COLD START)

PURE H₂ FROM CYCLING BED $P_{H2} > 250kPa$ T>175°C

**HEAT SOURCE** (18)

**EXHAUST EMISSION CONTROL DEVICE** (8)

# Fig.2.

# Fig.3.